# FASCICULE DE BREVET EUROPEEN

(11) **EP 3 057 851 B1**
(45) Date de publication et mention de la délivrance du brevet: **10.01.2018**
(21) Numéro de dépôt: 14796800.2
(22) Date de dépôt: 15.09.2014
(51) Int. Cl.: B62D 21/15, B62D 25/02

(54) **STRUCTURE DE BAVOLET DE VÉHICULE AUTOMOBILE**
PLATTENSTRUKTUR FÜR EINE KRAFTFAHRZEUG-HECKSCHÜRZE
MOTOR VEHICLE VALANCE PANEL STRUCTURE

(30) Priorité: 14.10.2013 FR 1359956
(43) Date de publication de la demande: 24.08.2016
(73) Titulaire: Renault s.a.s, 92100 Boulogne-Billancourt (FR)
(72) Inventeur: CAILLARD, Jerome, F-91190 Gif Sur Yvette (FR); HLUBINA, Thierry, F-92372 Chaville (FR); GAUMONT, Herve, F-78140 Velizy (FR)
(86) Numéro de dépôt international: PCT/FR2014/052288
(87) Numéro de publication internationale: WO 2015/055908

(56) Documents cités:
- DE-A1-102004 044 054
- JP-A- 2002 347 662
- JP-A- 2011 131 792
- KR-A- 20110 134 138
- US-A1- 2010 237 659
- US-A1- 2013 200 650

## Description

L'invention concerne une structure de bavolet de véhicule automobile. Le document JP 2011 131792 A divulgue une structure de bavolet selon le préambule de la revendication 1. Les véhicules automobiles comprennent usuellement un plancher bordé latéralement par un bas de caisse. Ce bas de caisse comporte un bavolet formé en général de deux profilés en U accolés en regard l'un de l'autre, l'un disposé du côté extérieur et l'autre disposé du côté du plancher et relié à ce dernier. Le bavolet est ainsi un corps creux qui doit cependant être capable de résister à un certain nombre de types de choc. Par exemple, dans le cas d'un choc frontal ou arrière, bien que des efforts assez importants transitent généralement par le bavolet, ce dernier doit pouvoir préserver la cellule de survie, à savoir la zone d'entrée de porte, pour permettre aux pompiers l'ouverture de la porte. En cas de choc latéral, par exemple de type choc poteau, le bavolet est la première zone de résistance rencontrée. Il doit donc être déformable dans la direction du choc pour absorber de l'énergie et ralentir l'impacteur avant le déploiement des airbags ou le contact avec les éléments internes au véhicule.

Habituellement, pour conférer au bavolet le comportement recherché en cas de choc, un renfort de section en forme d'Oméga (Ω), s'étendant suivant la direction longitudinale du véhicule, est situé à l'intérieur du bavolet formant un corps creux, en position couchée, à l'intérieur du profilé disposé du côté extérieur. Un tel renfort présente cependant une forme relativement complexe qui peut s'avérer difficile à réaliser selon le procédé de fabrication utilisé. Il peut en outre être avantageux de réduire au maximum la masse du bavolet, notamment pour les véhicules électriques, lesquels sont plus lourds que les véhicules thermiques, et ce, tout en respectant les exigences de sécurité.

Il existe donc un besoin pour la réalisation d'un bavolet moins lourd, présentant des caractéristiques de déformation en cas de choc similaires aux caractéristiques des bavolets actuellement utilisés.

A cet effet, l'invention propose une structure de bavolet comprenant :
- une première enveloppe s'étendant suivant une direction longitudinale, comportant :
   - une paroi de fond plane comprenant deux bords longitudinaux opposés,
   - une paroi latérale plane reliée à chaque bord longitudinal de la paroi de fond, lesdites parois latérales étant parallèles ou sensiblement parallèles et s'étendant perpendiculairement ou sensiblement perpendiculairement à la paroi de fond,
   - deux rebords de solidarisation parallèles ou sensiblement parallèles à la paroi de fond et reliés chacun à un bord longitudinal d'une paroi latérale distant de ladite paroi de fond,
- une deuxième enveloppe s'étendant suivant la même direction longitudinale que la première enveloppe et présentant une section sensiblement en forme de U, ladite deuxième enveloppe comprenant deux rebords de solidarisation appliqués contre les rebords de solidarisation de la première enveloppe et fixés à ceux-ci afin que les première et deuxième enveloppes forment un corps creux,
- un renfort interne s'étendant suivant ladite direction longitudinale, situé à l'intérieur dudit corps creux,
caractérisée en ce que ledit renfort interne est formé de trois parois planes disposées deux à deux à angle droit ou sensiblement à angle droit de manière à former une section de forme semblable à un Z, un bord libre longitudinal d'une première paroi plane étant inséré entre deux rebords de solidarisation assemblés des première et deuxième enveloppes, au moins sur une partie de la longueur desdits rebords de solidarisation, une troisième paroi plane parallèle ou sensiblement parallèle à la première paroi étant appliquée contre la paroi de fond de la première enveloppe et fixée à celle-ci.

La surface développée du renfort interne de la structure de bavolet selon l'invention est ainsi plus faible que la surface développée d'un renfort classique à section en Ω, permettant de fait une réduction de la masse de la structure de bavolet, tout en conservant un bon comportement en cas de choc. Notamment, la rectitude des parois du renfort interne et de la première enveloppe permet de reprendre des efforts relativement élevés axialement, autrement dit suivant la direction longitudinale des enveloppes. En outre, la forme simple du renfort interne autorise l'utilisation de procédés de fabrication ne permettant pas la réalisation de formes complexes, tels que la technologie dite de « roll forming » (profilage par des galets), notamment utilisée pour des aciers à ultra haute limite d'élasticité (acier UHLE) (Re >800MPa). Des aciers UHLE peuvent ainsi être utilisés lors de la réalisation de la structure de bavolet selon l'invention, notamment pour la réalisation du renfort interne, lequel peut alors présenter une épaisseur faible, par exemple de l'ordre de 1 mm, et par conséquent une masse modeste. La forme simple du renfort interne facilite également sa réalisation à une longueur voulue, qui peut varier selon le véhicule à équiper.

Avantageusement et de manière non limitative, la première enveloppe et le renfort interne délimitent un volume de section carrée ou rectangulaire, ce qui peut permettre d'améliorer la reprise des efforts, notamment suivant la direction longitudinale des enveloppes.

Le renfort interne peut comporter sur sa première paroi plane et/ou sur une deuxième paroi adjacente à ladite première paroi, des orifices traversant répartis sur sa longueur. Ces orifices permettent à la fois le passage d'outils de soudure et l'allègement du renfort.

Dans certains véhicules, il peut être avantageux de renforcer certaines zones de faiblesse du bavolet pour améliorer leur résistance, essentiellement en cas de choc.

A cet effet, la structure de bavolet selon l'invention peut comprendre une cornière de renforcement s'étendant suivant la même direction longitudinale que la première enveloppe et comprenant deux parois adjacentes planes ou sensiblement planes, dont l'une est appliquée contre, et fixée à, une paroi latérale de la première enveloppe et l'autre est appliquée contre, et fixée à, la paroi de fond de la première enveloppe, ladite cornière de renforcement étant située à l'intérieur d'un volume défini par ledit renfort interne et la première enveloppe.

Une telle cornière de renforcement peut s'étendre avantageusement sur une partie seulement de la longueur de la première enveloppe, au niveau d'une zone de faiblesse du véhicule, par exemple entre les deux pieds avant de la caisse du véhicule. Il n'est ainsi pas nécessaire d'ajouter cette cornière sur toute la longueur de la structure de bavolet, ce qui permet de limiter la masse ajoutée.

La cornière de renforcement peut comporter avantageusement une nervure sur sa paroi appliquée contre la paroi de fond de la première enveloppe, cette nervure s'étendant longitudinalement sur toute la longueur de la cornière de renforcement et saillant en direction dudit renfort interne. Une telle nervure permet de renforcer davantage la structure de bavolet, notamment longitudinalement.

En variante ou en combinaison, la cornière de renforcement peut présenter au moins un bord longitudinal dentelé ou ondulé, autrement dit non rectiligne, lequel permet également un gain de matière, et donc de masse, de la structure de bavolet.

Dans certains véhicules, il peut être avantageux de renforcer certaines zones de faiblesse du bavolet pour améliorer leur résistance suivant une direction transversale, essentiellement en cas de choc, notamment pour protéger un élément sensible du véhicule, par exemple une batterie, par exemple destinée à la propulsion du véhicule.

A cet effet, la structure de bavolet selon l'invention peut comprendre des moyens d'absorption de choc solidaires des première et deuxième enveloppes, disposés notamment à proximité de deux rebords de solidarisation assemblés, distincts des rebords de solidarisation assemblés entre lesquels est inséré un bord libre longitudinal du renfort interne, lesdits moyens d'absorption comprenant :
- une pluralité de supports déformables comprenant chacun une paroi sensiblement perpendiculaire à la direction longitudinale de la première enveloppe, lesdits supports étant solidarisés à la première enveloppe,
- une troisième enveloppe s'étendant suivant ladite direction longitudinale et de section semblable à un L, supportée par lesdits supports déformables et fixée sur une partie de la périphérie de ceux-ci, ladite troisième enveloppe comprenant :
   - un rebord de solidarisation assemblé à la paroi de fond de la première enveloppe,
   - une première paroi plane adjacente audit rebord de solidarisation et parallèle ou sensiblement parallèle à une paroi latérale de la première enveloppe, ladite première paroi plane étant fixée aux supports déformables,
   - une deuxième paroi plane adjacente à la première paroi et s'étendant parallèlement ou sensiblement parallèlement à la paroi de fond de la première enveloppe, ladite deuxième paroi plane étant fixée aux supports déformables,
   - une troisième paroi plane adjacente à la deuxième paroi, s'étendant parallèlement ou sensiblement parallèlement à la première paroi, ladite troisième paroi plane étant fixée aux supports déformables et à la deuxième enveloppe.

Les moyens d'absorption de choc sont ainsi disposés sous le renfort interne à l'intérieur du corps creux délimité par les deux enveloppes, lorsque la structure de bavolet est montée sur un véhicule. En cas de choc, notamment de choc transversal arrivant du côté de la deuxième enveloppe, les supports déformables se déforment suite aux efforts exercés sur la troisième enveloppe par la deuxième enveloppe, permettant ainsi d'absorber une partie du choc et de préserver la structure de la première enveloppe.

Avantageusement, la deuxième paroi plane de la troisième enveloppe est distante de la deuxième enveloppe. Autrement dit, elle n'est pas appliquée contre cette enveloppe.

Avantageusement, le rebord de solidarisation de la troisième enveloppe peut être fixé contre la troisième paroi plane du renfort interne, afin d'optimiser le nombre de liaisons (les points de soudure passant de deux à trois épaisseurs).

Avantageusement, l'ensemble des éléments de la structure de bavolet selon l'invention sont, par exemple, en acier, ces éléments étant assemblés par soudure. On peut notamment prévoir des orifices traversant pour le passage d'outils de soudage (par exemple pince à souder).

L'invention concerne également un véhicule automobile comprenant une caisse équipée de deux structures de bavolet selon l'invention, dans lequel, pour chaque structure de bavolet :
- la première enveloppe est située du côté interne du véhicule,
- la deuxième enveloppe est située du côté externe du véhicule,
- le renfort interne est disposé dans une partie supérieure de la structure de bavolet.

Le renfort interne est ainsi situé du côté de la structure de bavolet supportant le plancher, améliorant ainsi le comportement de la structure de bavolet dans cette zone.

Chacune des structures de bavolet de ce véhicule peut également comprendre l'une et/ou l'autre des caractéristiques suivantes :
- une cornière de renforcement de structure de bavolet située entre deux pieds avant de la caisse dudit véhicule,
- des moyens d'absorption de choc de structure de bavolet situés en regard, suivant une direction transversale au véhicule, d'un emplacement de la caisse destiné à recevoir une batterie, notamment destinée à la propulsion du véhicule.

En particulier, ces moyens d'absorption sont situés en regard de points de fixation de la batterie à la structure de bavolet.

L'invention est maintenant décrite en référence aux dessins annexés, non limitatifs, dans lesquels :
- la figure 1 est une vue en perspective éclatée d'une structure de bavolet selon un mode de réalisation de l'invention ;
- la figure 2 est une section transversale de la structure de bavolet de la figure 1 assemblée ;
- la figure 3 est une vue en perspective partiellement éclatée d'une structure de bavolet selon une variante de réalisation de l'invention,
- la figure 4 est une vue en perspective de la structure de bavolet représentée sur la figure 3 assemblée,
- la figure 5 est une section transversale de la structure de bavolet de la figure 4.

Dans la présente description, les termes avant, arrière, supérieur, inférieur, font référence aux directions avant et arrière, supérieure, inférieure de la structure de bavolet, lesquelles correspondent aux directions avant et arrière, supérieure, inférieure du véhicule lorsque la structure de bavolet est montée sur le véhicule. Les axes X, Y, Z, correspondent respectivement à l'axe longitudinal (d'avant en arrière), transversal et vertical du véhicule et donc de la structure de bavolet montée sur le véhicule.

Par « sensiblement parallèle ou perpendiculaire », on entend une direction/un plan formant un angle d'au plus ±10°, voire d'au plus ±5° ou d'au plus ±1° avec une direction/un plan parallèle ou perpendiculaire.

Par « sensiblement à angle droit », on entend un angle de 85° à 95° voire de 89° à 91°.

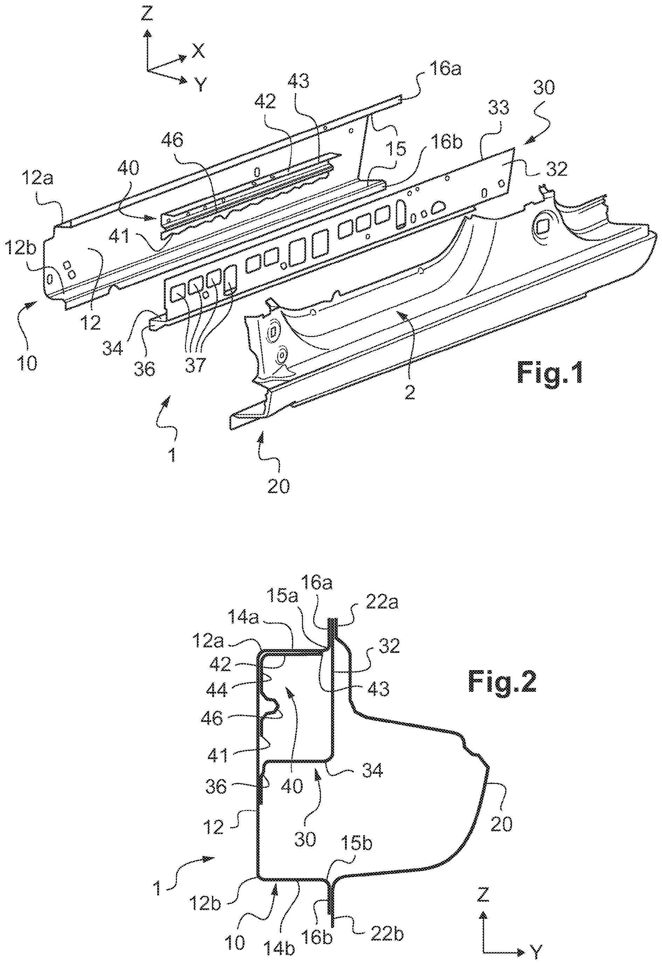

La figure 1 représente en éclaté une structure de bavolet 1 selon un mode de réalisation de l'invention, cette structure de bavolet 1 comprend :
- une première enveloppe 10 s'étendant suivant une direction longitudinale X, comportant :
   - une paroi de fond plane 12 comprenant deux bords longitudinaux opposés, à savoir un bord longitudinal supérieur 12a et un bord longitudinal inférieur 12b,
   - deux parois latérales planes, l'une supérieure 14a et l'autre inférieure 14b, reliées respectivement à un bord longitudinal supérieur 12a, inférieur 12b de la paroi de fond 12, lesdites parois latérales 14a, 14b étant parallèles ou sensiblement parallèles et s'étendant perpendiculairement ou sensiblement perpendiculairement à la paroi de fond 12,
   - deux rebords de solidarisation, l'un supérieur 16a et l'autre inférieur 16b, parallèles ou sensiblement parallèles à la paroi de fond 12, le rebord de solidarisation supérieur 16a étant relié au un bord longitudinal 15a de la paroi latérale supérieure 14a, le rebord de solidarisation inférieur 16b étant relié au bord longitudinal 15b de la paroi latérale 14b, ces bords longitudinaux 15a, 15b étant distants de ladite paroi de fond 12,
- une deuxième enveloppe 20 s'étendant suivant la même direction longitudinale X que la première enveloppe 10 et présentant une section sensiblement en forme de U, la deuxième enveloppe 20 comprenant deux rebords de solidarisation, l'un supérieur 22a et l'autre inférieur 22b, appliqués contre les rebords de solidarisation 16a, 16b de la première enveloppe 10 et fixés à ceux-ci afin que les première et deuxième enveloppes forment un corps creux,
- un renfort interne 30 s'étendant suivant ladite direction longitudinale et situé à l'intérieur du corps creux formé par les deux enveloppes 10 et 20.

La première enveloppe 10, ou enveloppe interne, est destinée à être dirigée vers l'intérieur du véhicule, pour recevoir et supporter le plancher du véhicule.

La deuxième enveloppe 20, ou enveloppe externe, est destinée à être dirigée vers l'extérieur du véhicule. Elle fait généralement partie de la caisse du véhicule (non représentée) et forme le bas de caisse de ce dernier.

Les première et deuxième enveloppes 10, 20 sont des éléments métalliques, généralement en acier, assemblés par soudage de leurs rebords de solidarisation supérieurs 16a, 22a et inférieurs 16b, 22b respectivement. La concavité de la section en forme de U de la deuxième enveloppe est généralement dirigée vers la première enveloppe 10, du côté de la concavité de cette dernière.

Selon l'invention, le renfort interne 30 comprend trois parois planes 32, 34, 36 disposées deux à deux à angle droit ou sensiblement à angle droit de manière à former une section de forme semblable à un Z, tel que visible sur la figure 2.

Un bord libre longitudinal 33 d'une première paroi plane 32 est insérée entre deux rebords de solidarisation supérieurs assemblés 16a et 22a des première et deuxième enveloppes 10, 20, du côté supérieur de la structure de bavolet 1.

Une troisième paroi plane 36 parallèle ou sensiblement parallèle à la première paroi 32 est appliquée contre la paroi de fond 12 de la première enveloppe 10 et fixée à celle-ci.

Dans l'exemple représenté sur les figures, la première enveloppe 10 et le renfort interne 30 délimitent un volume de section rectangulaire. Autrement dit, les angles entre les différentes parois planes du renfort interne et entre les différentes parois de la première enveloppe sont des angles droits.

Le renfort interne 30 présente en outre sur sa première paroi plane 32 des orifices traversant 37 répartis sur sa longueur (figure 1). Ces orifices permettent le passage d'un outil de soudure pour la fixation notamment d'un plancher sur la première enveloppe 10.

Le renfort interne 30 est disposé dans une partie supérieure de la structure de bavolet 1 et ferme le coin supérieur de la première enveloppe 10 formé par la paroi latérale supérieure 14a et la paroi de fond 12.

Dans l'exemple représenté sur les figures 1 et 2, la structure de bavolet 1 selon l'invention comprend également une cornière de renforcement 40 s'étendant suivant la même direction longitudinale X que la première enveloppe 10 et comprenant deux parois adjacentes 42, 44 planes ou sensiblement planes, dont l'une 42 est appliquée contre, et fixée à, la paroi latérale supérieure 14a de la première enveloppe 10 et l'autre 44 est appliquée contre, et fixée à, la paroi de fond 12 de la première enveloppe. Cette cornière de renforcement 40 est située à l'intérieur d'un volume défini par le renfort interne 30 et la première enveloppe 10, tel que visible sur la figure 2, dans la partie supérieure de l'enveloppe 10.

La paroi 44 de la cornière de renforcement, appliquée contre la paroi de fond 12 de la première enveloppe 10, comporte en outre une nervure 46 s'étendant longitudinalement sur toute sa longueur, cette nervure 46 saillant en direction du renfort interne 30, tel que visible sur la figure 2.

Un bord libre longitudinal 41 de la cornière de renforcement 40 présente également une forme dentelée ou ondulée permettant un gain de poids. L'autre bord longitudinal libre 43 de la cornière de renforcement 40 pourrait également être dentelé. Dans l'exemple représenté, ce deuxième bord longitudinal libre 43 est rectiligne et s'étend à proximité du bord longitudinal 15a de la paroi latérale supérieure 14a. Autrement dit, la paroi 42 de la cornière de renforcement 44 s'étend sur sensiblement toute la largeur, suivant une direction transversale Y, de la paroi latérale 14a de la première enveloppe 10.

La cornière de renforcement 40 peut être située entre les deux pieds avant de la caisse du véhicule automobile, autrement dit au niveau de l'entrée de porte 2 du véhicule (figure 1), zone qui subit les efforts les plus importants en cas de choc longitudinal.

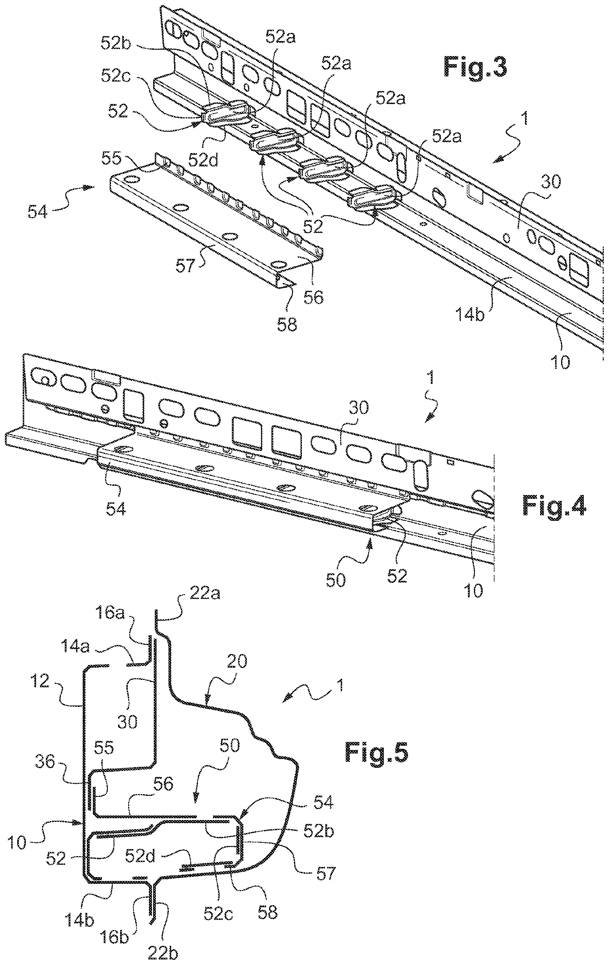

La structure de bavolet 1 selon l'invention peut également comporter des moyens d'absorption de choc 50, notamment de choc transversal. Les figures 3 à 5 représentent un exemple de moyens d'absorption 50. Sur ces figures, les éléments de la première enveloppe 10, de la deuxième enveloppe 20 et du renfort interne 30 sont identiques à ceux décrits en référence aux figures 1 et 2 et sont désignés par les mêmes références. Seule la cornière de renforcement 40 n'est pas représentée sur les figures 3 à 5, essentiellement car elle est disposée à un autre endroit de la structure de bavolet 1 que les moyens d'absorption de choc 50 dans l'exemple représenté. Une même structure de bavolet 1 peut ainsi être équipée à la fois d'une cornière de renforcement 40 et de moyens d'absorption de choc 50.

Les moyens d'absorption de choc 50 représentés sont solidaires des première et deuxième enveloppes 10, 20, et sont disposés du côté des deux rebords de solidarisation 16b, 22b assemblés, distincts des rebords de solidarisation 16a, 22a entre lesquels est inséré le renfort interne 30, tel que visible plus précisément sur la figure 6.

Ces moyens d'absorption 50 comprennent :
- une pluralité de supports déformables 52 comprenant chacun une paroi 52a sensiblement perpendiculaire à la direction longitudinale X de la première enveloppe 10, ces supports déformables 52 étant solidarisés à la première enveloppe 10,
- une troisième enveloppe 54 s'étendant suivant la même direction longitudinale X et de section semblable à un L, supportée par les supports déformables 52 et fixée sur une partie de la périphérie de ceux-ci.

Cette troisième enveloppe 54 comprend :
- un rebord de solidarisation 55 assemblé à la paroi de fond 12 de la première enveloppe 10,
- une première paroi plane 56 adjacente au rebord de solidarisation 55 et parallèle ou sensiblement parallèle à une paroi latérale 14a ou 14b de la première enveloppe 10,
- une deuxième paroi plane 57 adjacente à la première paroi 56 et s'étendant parallèlement ou sensiblement parallèlement à la paroi de fond 12 de la première enveloppe 10,
- une troisième paroi plane 58 adjacente à la deuxième paroi 57, s'étendant parallèlement ou sensiblement parallèlement à la première paroi 56.

La première paroi plane 56 est fixée aux supports déformables 52, notamment sur leur bord horizontal supérieur 52b, la deuxième paroi plane 57 est fixée aux supports déformables 52, notamment sur leur bord vertical 52c distant de la paroi de fond 12 et la troisième paroi plane 58 est fixée aux supports déformables 52, notamment sur une partie de leur bord horizontal inférieur 52d, et à la deuxième enveloppe 20.

Notamment, le rebord de solidarisation 55 de la troisième enveloppe 54 est fixé contre la troisième paroi plane 36 du renfort interne 33 (figure 5). Une solidarisation des moyens d'absorption 50 peut également être prévue au niveau de la paroi latérale inférieure 14b.

Ces moyens d'absorption de choc 50 peuvent être situés en regard, suivant la direction transversale Y du véhicule, d'un emplacement de la caisse destiné à recevoir une batterie, notamment une batterie de véhicule électrique, ce qui permet de protéger la batterie en cas de choc latéral (choc poteau).

Bien entendu, on peut également prévoir que des moyens d'absorption 50 soient disposés en d'autres endroits de la structure de bavolet, par exemple à hauteur d'une cornière de renforcement. Le nombre de cornières de renforcement et de moyens d'absorption n'est pas limité non plus et pourra varier en fonction de la résistance recherchée.

## Revendications

1. Structure de bavolet (1) comprenant :
- une première enveloppe (10) s'étendant suivant une direction longitudinale (X), comportant :
- une paroi de fond plane (12) comprenant deux bords longitudinaux (12a, 12b) opposés,
- une paroi latérale plane (14a, 14b) reliée à chaque bord longitudinal (12a, 12b) de la paroi de fond (12), lesdites parois latérales (14a, 14b) étant parallèles ou sensiblement parallèles et s'étendant perpendiculairement ou sensiblement perpendiculairement à la paroi de fond (12),
- deux rebords de solidarisation (16a, 16b) parallèles ou sensiblement parallèles à la paroi de fond (12) et reliés chacun à un bord longitudinal (15a, 15b) d'une paroi latérale distant de ladite paroi de fond (12),
- une deuxième enveloppe (20) s'étendant suivant la même direction longitudinale (X) que la première enveloppe (10) et présentant une section sensiblement en forme de U, ladite deuxième enveloppe (20) comprenant deux rebords de solidarisation (22a, 22b) appliqués contre les rebords de solidarisation (16a, 16b) de la première enveloppe (10) et fixés à ceux-ci afin que les première et deuxième enveloppes forment un corps creux,
- un renfort interne (30) s'étendant suivant ladite direction longitudinale (X), situé à l'intérieur dudit corps creux,
**caractérisée en ce que** ledit renfort interne (30) est formé de trois parois planes (32, 34, 36) disposées deux à deux à angle droit ou sensiblement à angle droit de manière à former une section de forme semblable à un Z, un bord libre longitudinal (33) d'une première paroi (32) plane étant inséré entre deux rebords de solidarisation assemblés (16a, 22a) des première et deuxième enveloppes, au moins sur une partie de la longueur desdits rebords de solidarisation, une troisième paroi plane (36) parallèle ou sensiblement parallèle à la première paroi (32) étant appliquée contre la paroi de fond (12) de la première enveloppe et fixée à celle-ci.

2. Structure de bavolet (1) selon la revendication 1, **caractérisée en ce que** la première enveloppe (10) et le renfort interne (30) délimitent un volume de section carrée ou rectangulaire.

3. Structure de bavolet (1) selon l'une des revendications 1 ou 2, **caractérisée en ce que** le renfort interne (30) comporte sur sa première paroi plane (32) et/ou sur une deuxième paroi (34) adjacente à ladite première paroi (32), des orifices traversant (37) répartis sur sa longueur.

4. Structure de bavolet (1) selon l'une des revendications 1 à 3, **caractérisée en ce qu'**elle comprend une cornière de renforcement (40) s'étendant suivant la même direction longitudinale (X) que la première enveloppe (10) et comprenant deux parois adjacentes (42, 44) planes ou sensiblement planes, dont l'une (42) est appliquée contre, et fixée à, une paroi latérale (14a) de la première enveloppe (10) et l'autre (44) est appliquée contre, et fixée à, la paroi de fond (12) de la première enveloppe (10), ladite cornière de renforcement (40) étant située à l'intérieur d'un volume défini par ledit renfort interne (30) et la première enveloppe (10).

5. Structure de bavolet (1) selon la revendication 4, **caractérisée en ce que** la paroi (44) de la cornière de renforcement (40) appliquée contre la paroi de fond (12) comporte une nervure (46) s'étendant longitudinalement sur toute sa longueur, ladite nervure (46) saillant en direction dudit renfort interne (30).

6. Structure de bavolet (1) selon l'une des revendications 4 ou 5, **caractérisée en ce que** ladite cornière de renforcement (40) présente au moins un bord libre longitudinal (41) dentelé ou ondulé.

7. Structure de bavolet (1) selon l'une des revendications 1 à 6, **caractérisée en ce qu'**elle comprend des moyens d'absorption de choc (50) solidaires des première et deuxième enveloppes (10, 20), disposés à proximité des deux rebords de solidarisation assemblés (16b, 22b), distincts des rebords de solidarisation assemblés (16a, 22a) entre lesquels est inséré un bord libre longitudinal (33) du renfort interne, lesdits moyens d'absorption (50) comprenant :
- une pluralité de supports déformables (52) comprenant chacun une paroi (52a) sensiblement perpendiculaire à la direction longitudinale (X) de la première enveloppe (10), lesdits supports (52) étant solidarisés à la première enveloppe (10),
- une troisième enveloppe (54) s'étendant suivant ladite direction longitudinale (X) et de section semblable à un L, supportée par lesdits supports déformables (52) et fixée sur une partie de la périphérie de ceux-ci, ladite troisième enveloppe (54) comprenant :
- un rebord de solidarisation (55) assemblé à la paroi de fond (12) de la première enveloppe (10),
- une première paroi plane (56) adjacente audit rebord de solidarisation (55) et parallèle ou sensiblement parallèle à une paroi latérale (14a, 14b) de la première enveloppe, ladite première paroi plane (56) étant fixée aux supports déformables (52),
- une deuxième paroi plane (57) adjacente à la première paroi (56) et s'étendant parallèlement ou sensiblement parallèlement à la paroi de fond (12) de la première enveloppe, ladite deuxième paroi plane (57) étant fixée aux supports déformables (52),
- une troisième paroi plane (58) adjacente à la deuxième paroi (57), s'étendant parallèlement ou sensiblement parallèlement à la première paroi (56), ladite troisième paroi plane (58) étant fixée aux supports déformables et à la deuxième enveloppe.

8. Structure de bavolet (1) selon la revendication 7, **caractérisée en ce que** le rebord de solidarisation (55) de la troisième enveloppe (54) est fixé contre la troisième paroi plane (36) du renfort interne (30).

9. Véhicule automobile comprenant une caisse équipée de deux structures de bavolet (1) selon l'une des revendications précédentes, dans lequel, pour chaque structure de bavolet :
- la première enveloppe (10) est située du côté interne du véhicule,
- la deuxième enveloppe (20) est située du côté externe du véhicule,
- le renfort interne (30) est disposé dans une partie supérieure de la structure de bavolet.

10. Véhicule automobile selon la revendication 9, dans lequel chacune des structures de bavolet de ce véhicule comprend l'une et/ou l'autre des caractéristiques suivantes :
- une cornière de renforcement (40) de structure de bavolet située entre deux pieds avant de la caisse dudit véhicule,
- des moyens d'absorption de choc (50) de structure de bavolet situés en regard, suivant une direction transversale au véhicule, d'un emplacement de la caisse destiné à recevoir une batterie.

## Patentansprüche

1. Schwellerstruktur (1), die enthält:
- eine sich gemäß einer Längsrichtung (X) erstreckende erste Verkleidung (10), die aufweist:
- eine ebene Rückwand (12), die zwei gegenüberliegende Längsränder (12a, 12b) enthält,
- eine ebene Seitenwand (14a, 14b), die mit jedem Längsrand (12a, 12b) der Rückwand (12) verbunden ist, wobei die Seitenwände (14a, 14b) parallel oder im Wesentlichen parallel sind und sich lotrecht oder im Wesentlichen lotrecht zur Rückwand (12) erstrecken,
- zwei zur Rückwand (12) parallele oder im Wesentlichen parallele Befestigungsrandleisten (16a, 16b), die je mit einem von der Rückwand (12) entfernten Längsrand (15a, 15b) einer Seitenwand verbunden sind,
- eine zweite Verkleidung (20), die sich gemäß der gleichen Längsrichtung (X) wie die erste Verkleidung (10) erstreckt und einen im Wesentlichen U-förmigen Querschnitt hat, wobei die zweite Verkleidung (20) zwei Befestigungsrandleisten (22a, 22b) enthält, die gegen die Befestigungsrandleisten (16a, 16b) der ersten Verkleidung (10) angelegt und an diesen befestigt sind, damit die erste und die zweite Verkleidung einen Hohlkörper formen,
- eine sich gemäß der Längsrichtung (X) erstreckende innere Verstärkung (30), die sich im Inneren des Hohlkörpers befindet,
**dadurch gekennzeichnet, dass** die innere Verstärkung (30) von drei ebenen Wänden (32, 34, 36) gebildet wird, die paarweise im rechten Winkel oder im Wesentlichen im rechten Winkel angeordnet sind, um einen Querschnitt einer Form ähnlich einem Z zu bilden, wobei ein freier Längsrand (33) einer ersten ebenen Wand (32) zwischen zwei zusammengebaute Befestigungsrandleisten (16a, 22a) der ersten und zweiten Verkleidungen mindestens über einen Teil der Länge der Befestigungsrandleisten eingefügt ist, wobei eine dritte ebene Wand (36) parallel oder im Wesentlichen parallel zur ersten Wand (32) gegen die Rückwand (12) der ersten Verkleidung angelegt und an dieser befestigt ist.

2. Schwellerstruktur (1) nach Anspruch 1, **dadurch gekennzeichnet, dass** die erste Verkleidung (10) und die innere Verstärkung (30) ein Volumen mit einem quadratischen oder rechtwinkligen Querschnitt begrenzen.

3. Schwellerstruktur (1) nach einem der Ansprüche 1 oder 2, **dadurch gekennzeichnet, dass** die innere Verstärkung (30) auf ihrer ersten ebenen Wand (32) und/oder auf einer der ersten Wand (32) benachbarten zweiten Wand (34) über ihre Länge verteilte Durchgangsöffnungen (37) aufweist.

4. Schwellerstruktur (1) nach einem der Ansprüche 1 bis 3, **dadurch gekennzeichnet, dass** sie ein Verstärkungswinkelprofil (40) enthält, das sich gemäß der gleichen Längsrichtung (X) wie die erste Verkleidung (10) erstreckt und zwei ebene oder im Wesentlichen ebene benachbarte Wände (42, 44) enthält, von denen eine (42) gegen eine Seitenwand (14a) der ersten Verkleidung (10) angelegt und daran befestigt ist, und die andere (44) gegen die Rückwand (12) der ersten Verkleidung (10) angelegt und daran befestigt ist, wobei das Verstärkungswinkelprofil (40) sich im Inneren eines Volumens befindet, das von der inneren Verstärkung (30) und der ersten Verkleidung (10) definiert wird.

5. Schwellerstruktur (1) nach Anspruch 4, **dadurch gekennzeichnet, dass** die Wand (44) des Verstärkungswinkelprofils (40), die gegen die Rückwand (12) angelegt ist, eine Rippe (46) aufweist, die sich in Längsrichtung über ihre ganze Länge erstreckt, wobei die Rippe (46) in Richtung der inneren Verstärkung (30) vorsteht.

6. Schwellerstruktur (1) nach einem der Ansprüche 4 oder 5, **dadurch gekennzeichnet, dass** das Verstärkungswinkelprofil (40) mindestens einen gezahnten oder gewellten freien Längsrand (41) aufweist.

7. Schwellerstruktur (1) nach einem der Ansprüche 1 bis 6, **dadurch gekennzeichnet, dass** sie fest mit den ersten und zweiten Verkleidungen (10, 20) verbundene Stoßabsorptionseinrichtungen (50) enthält, die in der Nähe der zwei zusammengebauten Befestigungsrandleisten (16b, 22b) angeordnet sind, die sich von den zusammengebauten Befestigungsrandleisten (16a, 22a) unterscheiden, zwischen die ein freier Längsrand (33) der inneren Verstärkung eingefügt ist, wobei die Stoßabsorptionseinrichtungen (50) enthalten:
- eine Vielzahl verformbarer Träger (52), die je eine Wand (52a) im Wesentlichen lotrecht zur Längsrichtung (X) der ersten Verkleidung (10) enthalten, wobei die Träger (52) fest mit der ersten Verkleidung (10) verbunden sind,
- eine dritte Verkleidung (54), die sich gemäß der Längsrichtung (X) erstreckt und einen Querschnitt gleich einem L hat, getragen von den verformbaren Trägern (52) und an einem Teil von deren Umfang befestigt, wobei die dritte Verkleidung (54) enthält:
- eine Befestigungsrandleiste (55), die mit der Rückwand (12) der ersten Verkleidung (10) zusammengebaut ist,
- eine erste ebene Wand (56), die der Befestigungsrandleiste (55) benachbart ist und parallel oder im Wesentlichen parallel zu einer Seitenwand (14a, 14b) der ersten Verkleidung liegt, wobei die erste ebene Wand (56) an den verformbaren Trägern (52) befestigt ist,
- eine zweite ebene Wand (57), die der ersten Wand (56) benachbart ist und sich parallel oder im Wesentlichen parallel zur Rückwand (12) der ersten Verkleidung erstreckt, wobei die zweite ebene Wand (57) an den verformbaren Trägern (52) befestigt ist,
- eine der zweiten Wand (57) benachbarte dritte ebene Wand (58), die sich parallel oder im Wesentlichen parallel zur ersten Wand (56) erstreckt, wobei die dritte ebene Wand (58) an den verformbaren Trägern und an der zweiten Verkleidung befestigt ist.

8. Schwellerstruktur (1) nach Anspruch 7, **dadurch gekennzeichnet, dass** die Befestigungsrandleiste (55) der dritten Verkleidung (54) gegen die dritte ebene Wand (36) der inneren Verstärkung (30) befestigt ist.

9. Kraftfahrzeug, das eine Karosserie enthält, die mit zwei Schwellerstrukturen (1) nach einem der vorhergehenden Ansprüche ausgestattet ist, wobei für jede Schwellerstruktur:
- die erste Verkleidung (10) sich an der Innenseite des Fahrzeugs befindet,
- die zweite Verkleidung (20) sich an der Außenseite des Fahrzeugs befindet,
- die innere Verstärkung (30) in einem oberen Teil der Schwellerstruktur angeordnet ist.

10. Kraftfahrzeug nach Anspruch 9, wobei jede der Schwellerstrukturen dieses Fahrzeugs das eine und/oder andere der folgenden Merkmale enthält:
- ein Verstärkungswinkelprofil (40) einer Schwellerstruktur, das sich zwischen zwei A-Säulen der Karosserie des Fahrzeugs befindet,
- Stoßabsorptionseinrichtungen (50) der Schwellerstruktur, die sich in einer Richtung quer zum Fahrzeug gegenüber einer Stelle der Karosserie befinden, die dazu bestimmt ist, eine Batterie aufzunehmen.

## Claims

1. Valance panel structure (1) which includes:
- a first shell (10) which extends in a longitudinal direction (X) and comprises:
- a flat bottom wall (12) which includes two opposite longitudinal edges (12a, 12b),
- a flat side wall (14a, 14b) which is connected to each longitudinal edge (12a, 12b) of the bottom wall (12), said side walls (14a, 14b) being parallel or substantially parallel and extending in a perpendicular or a substantially perpendicular manner with respect to the bottom wall (12),
- two joining rims (16a, 16b) which are parallel or substantially parallel to the bottom wall (12) and are each connected to a longitudinal edge (15a, 15b) of a side wall, said edge being remote from said bottom wall (12),
- a second shell (20) which extends in the same longitudinal direction (X) as the first shell (10) and has a substantially U-shaped section, said second shell (20) including two joining rims (22a, 22b) which are applied against the joining rims (16a, 16b) of the first shell (10) and are fixed to the same so that the first and second shells form a hollow body,
- an inner reinforcement (30) which extends in said longitudinal direction (X) and is situated inside said hollow body,
**characterized in that** said inner reinforcement (30) includes three flat walls (32, 34, 36) which are arranged in pairs at right angles or substantially at right angles so as to form a section with a form similar to a Z, a longitudinal free edge (33) of a first flat wall (32) being inserted between two assembled joining rims (16a, 22a) of the first and second shells, at least over part of the length of said joining rims, a third flat wall (36) which is parallel or substantially parallel to the first wall (32) being applied against the bottom wall (12) of the first shell and fixed to said first shell.

2. Valance panel structure (1) according to Claim 1, **characterized in that** the first shell (10) and the inner reinforcement (30) delimit a volume with a square or rectangular section.

3. Valance panel structure (1) according to either of Claims 1 and 2, **characterized in that** on its first flat wall (32) and/or on a second wall (34) adjacent said first wall (32), the inner reinforcement (30) comprises through-openings (37) which are distributed over its length.

4. Valance panel structure (1) according to one of Claims 1 to 3, **characterized in that** it includes a corner angle (40) which extends in the same longitudinal direction (X) as the first shell (10) and includes two flat or substantially flat adjacent walls (42, 44), one (42) of which is applied against, and fixed to, a side wall (14a) of the first shell (10) and the other (44) is applied against, and fixed to, the bottom wall (12) of the first shell (10), said corner angle (40) being situated inside a volume which is defined by said inner reinforcement (30) and the first shell (10).

5. Valance panel structure (1) according to Claim 4, **characterized in that** the wall (44) of the corner angle (40) which is applied against the bottom wall (12) includes a rib (46) which extends longitudinally over its entire length, said rib (46) protruding in the direction of said inner reinforcement (30).

6. Valance panel structure (1) according to either of Claims 4 and 5, **characterized in that** said corner angle (40) has at least one longitudinal free edge (41) which is serrated or corrugated.

7. Valance panel structure (1) according to one of Claims 1 to 6, **characterized in that** it includes shock absorbing means (50) which are integral with the first and second shells (10, 20) and are arranged close to the two assembled joining rims (16b, 22b) which are separate from the assembled joining rims (16a, 22a) between which is inserted a longitudinal free edge (33) of the inner reinforcement, said absorbing means (50) including:
- a plurality of deformable supports (52), each including a wall (52a) which is substantially perpendicular with respect to the longitudinal direction (X) of the first shell (10), said supports (52) being secured to the first shell (10),
- a third shell (54) which extends in said longitudinal direction (X), and is similar to an L-shape in section, is supported by said deformable supports (52) and is fixed on part of the periphery of said deformable supports, said third shell (54) including:
- a joining rim (55) which is assembled on the bottom wall (12) of the first shell (10),
- a first flat wall (56) which is adjacent said joining rim (55) and parallel or substantially parallel with respect to a side wall (14a, 14b) of the first shell, said first flat wall (56) being fixed to the deformable supports (52),
- a second flat wall (57) which is adjacent the first wall (56) and extends in a parallel or substantially parallel manner with respect to the bottom wall (12) of the first shell, said second flat wall (57) being fixed to the deformable supports (52),
- a third flat wall (58) which is adjacent the second wall (57) and extends in a parallel or substantially parallel manner with respect to the first wall (56), said third flat wall (58) being fixed to the deformable supports and to the second shell.

8. Valance panel structure (1) according to Claim 7, **characterized in that** the joining rim (55) of the third shell (54) is fixed against the third flat wall (36) of the inner reinforcement (30).

9. Motor vehicle which includes a body which is provided with two valance panel structures (1) according to one of the preceding claims, in which, for each valance panel structure:
- the first shell (10) is situated on the inside surface of the vehicle,
- the second shell (20) is situated on the outside surface of the vehicle,
- the inner reinforcement (30) is situated in an upper part of the valance panel structure.

10. Motor vehicle according to Claim 9, in which each of the valance panel structures of said vehicle includes one and/or other of the following characteristics:
- a valance panel structure corner angle (40) which is situated between two A pillars of the body of said vehicle,
- valance panel structure shock absorbing means (50) which, in a transverse direction with respect to the vehicle, are situated opposite an area of the body which is intended to receive a battery.
